# EUROPÄISCHE PATENTANMELDUNG

(11) **EP 2 026 008 A1**
(43) Veröffentlichungstag der Anmeldung: **18.02.2009**
(21) Anmeldenummer: 08013387.9
(22) Anmeldetag: 25.07.2008
(51) Int. Cl.: F24C 5/00, F28F 21/04, F28D 20/00

(54) **Alkoholbefeuerter Kamin**

(30) Priorität: 14.08.2007 DE 202007011347 U; 14.08.2007 DE 102007038200
(71) Anmelder: Mehlhorn, Jörg, 08280 Aue (DE)
(72) Erfinder: Mehlhorn, Jörg, 08280 Aue (DE); Girlich, Dieter, Dr., 01309 Dresden (DE)
(74) Vertreter: Kaufmann, Sigfrid

(57) **Zusammenfassung**

Die Erfindung betrifft einen Kamin, der mit Bioalkohol oder anderen flüssigen Kohlenwasserstoffen befeuert wird. Die beim Befeuern entstehende Wärme wird im Kamin gespeichert und nach Beenden des Befeuerns im Verlauf eines Zeitraums von mehreren Stunden abgegeben.

Bei dem erfindungsgemäßen Kamin besteht mindestens eine der Wände (4, 5, 9) und/oder die Decke (6) des Kamins bzw. der Feuerkammer des Kamins ganz oder teilweise aus einem plattenförmig ausgeformten Verbundwerkstoff, der sich aus mindestens einer keramischen und/oder mineralischen Komponente mit hoher spezifischer Wärmekapazität und aus mindestens einer metallischen Komponente mit hoher thermischer Leitfähigkeit zusammensetzt. Die metallische Komponente bildet die Matrix des Verbundwerkstoffes. Die keramische/mineralische Komponente liegt in Form von Teilchen vor, die überall im Werkstoff vollständig von der metallischen Komponente umgeben sind.

Bevorzugt bestehen Verbundwerkstoffplatten aus den Materialien Aluminium und Serpentin.

## Beschreibung

Die Erfindung betrifft einen Kamin, der mit Alkohol oder anderen flüssigen Kohlenwasserstoffen befeuert wird. Die beim Befeuern entstehende Wärme wird im Kamin gespeichert und nach Beenden des Befeuerns im Verlauf eines Zeitraums von mehreren Stunden abgegeben.

Alkoholbefeuerte Kamine wurden in den letzten Jahren ständig weiterentwickelt. So wird für derartige alkoholbefeuerte Kamine als Brennstoff üblicherweise Alkohol verwendet, der Zusätze enthält, die diesen mit leuchtender Flamme brennen lassen. Eingesetzt in neu entwickelten Brennereinsätzen, in denen ein solcher Alkohol mit einer flächigen, dem Holzfeuer ähnlichen Flammenbild verbrennt und in Kombination mit Nachbildungen von Holzscheiten bzw. Aststücken aus Keramik, die in den Kamin eingelegt werden, ist das Feuer in einem alkoholbefeuerten Kamin kaum noch von dem eines holzbefeuerten Kamines zu unterscheiden.

Da die alkoholbefeuerten Kamine gegenüber herkömmlichen, holzbefeuerten Kaminen viele Vorteile aufweisen, nimmt die Nachfrage nach diesen stetig zu.

Im Gegensatz zu herkömmlichen Kaminen, benötigen die alkoholbefeuerten keinen Schornstein. Infolgedessen können sie an beliebigen Stellen im Wohnbereich aufgebaut werden. Kosten, die beim Aufbau und Betrieb eines holzbefeuerten Kamins durch den Anschluss des Kamins an den Schornstein sowie durch die notwendige, in Deutschland gesetzlich vorgeschriebene Wartung durch einen Schornsteinfeger, entstehen, entfallen bei einem alkoholbefeuerten Kamin.

Anders als bei der Verbrennung von Holz, bei der durch Ruß-, Rauch- und Aschebildung toxischen Substanzen und Feinstäube entstehen und bei der der Kamin und z. T. auch der umgebende Wohnraum verschmutzt wird, entstehen bei der Verbrennung von Alkohol, wie z.B. Ethanol, nur ausschließlich Kohlendioxid und Wasser. Ethanol ist, genauso wie Holz, ein nachwachsender Rohstoff.

Alkoholbefeuerte Kamine dürfen nur bis zu einer bestimmten Heizleistung ohne Schornstein betrieben werden. In Deutschland liegt diese Grenze der Heizleistung bei 3,6 kW. Alle Anlagen mit Heizleistungen, die unterhalb dieser Grenze liegen, gelten als Feuerstellen, Anlagen mit einer höheren Heizleistung gelten als Feuerstätten. Infolgedessen werden alkoholbefeuerte Kamine üblicherweise als Feuerstelle konzipiert und haben deshalb eine Heizleistung von üblicherweise 3,0 bis 3,5 kW.

Für nicht allzu große Räume in Gebäuden mit guter Wärmedämmung ist insbesondere in den Übergangszeiten eine solche Heizleistung von 3 bis 3,5 kW meist zu hoch. Denn im Gegensatz zu den an einen Schornstein angeschlossenen Kaminen, bei denen ein großer Teil der Wärme durch den Schornstein verloren geht, bewirkt bei den alkoholbefeuerten Kaminen die gesamte Heizleistung eine Erwärmung des Raumes. Die Folge ist, dass sich die Räume während des Betriebs des Kamins schnell überhitzen und ggf. zur Abkühlung belüftet werden müssen.

Da die alkoholbefeuerten Kamine vorwiegend aus verkleideten feuerfesten Mineralfaserplatten, die eine vergleichsweise geringe Wärmekapazität besitzen, aufgebaut sind, kühlt nach der Befeuerung, der Raum schnell wieder aus. Um ein rasches Überhitzen einerseits und schnelles Auskühlen der Räume andererseits zu vermeiden, ist es notwendig, die Kamine so aufzubauen, dass während des Betriebs ein großer Teil der Wärme nicht in den Raum abgegeben, sondern im Kamin gespeichert und anschließend über einen längeren Zeitraum wieder abgegeben wird.

Aus US 4,270,512 A, DE 197 17 038 A1, DE 10 2005 007 043 A1, DE 20 2005 005 167 U1, DE 102 15 819 A1, DE 20 2005 018 083 U1, DE 20 2005 004 244 U1 und DE 10 2006 003 441 A1 sind Lösungen zur Speicherung der Wärme in Kaminen und Öfen bekannt, für die herkömmliche mineralische oder keramische Wärmespeichermaterialien, wie z.B. Schamott oder Speckstein, eingesetzt werden.

Für alkoholbefeuerte Kamine, die üblicherweise nur wenige Stunden pro Brennvorgang beheizt werden und die zudem eine geringere Heizleistung als holzbefeuerte Kamine/Kachelöfen haben, sind diese Wärmespeichermaterialen jedoch ungeeignet. Ursächlich hierfür ist, dass sie nicht in der Lage sind, kleinere Wärmemengen in kurzer Zeit aufzunehmen.

Aus dem Stand der Technik sind auch vereinzelt Lösungen bekannt, die eine schnellere Wärmeverteilung in Wärmespeichern ermöglichen, sodass Wärme, die in vergleichsweise kurzen Zeiträumen mit geringerer Intensität abgegeben wird, besser gespeichert wird.

So wird in DE 809 241 B eine aus Teilen, die aus pulvermetallurgisch hergestellten Misch- bzw. Verbundwerkstoffen mit einer metallischen und einer nichtmetallischen Phase bestehen, aufgebaute Heizvorrichtung gezeigt.

Durch den metallischen Anteil des Verbundwerkstoffs kann dessen Wärmeleitfähigkeit zwar erhöht werden, abhängig von der Höhe dieses Anteils bildet sich jedoch im Werkstoff entweder überhaupt kein Netzwerk von miteinander versinterten metallischen Partikeln aus oder es werden lediglich dünne, mit schlecht wärmeleitenden keramischen Partikeln durchsetzte Verbindungsstege gebildet. Deren Wärmeleitfähigkeit ist außerdem aufgrund von Korngrenzen und der Porosität des Sinterwerkstoffs noch geringer als die entsprechender massiver Stege. Für einen Einsatz als Wärmespeichermaterial in alkoholbefeuerten Kaminen erfolgt die Wärmeverteilung im Verbundwerkstoff deshalb immer noch zu langsam.

In DE 10 2006 003 441 A1 wird ein Modul-Bausatz zum Umbau von Bioethanol- bzw. Brenngelfeuerstellen beschrieben, mit dem eine verbesserte Speicherung der von den Feuerstätten/-stellen erzeugten Wärme erreicht werden soll. Hierzu wird die von der Feuerstätte/-stelle erzeugte Heißluft durch die kanalartigen Hohlräume einer Anordnung, die aus Planfüll- und Lochziegeln aufgebaut ist, geleitet.

Mit dem Modul-Bausatz könnte eine Speicherung der Wärme von ethanolbeheizten Kaminen möglich sein; nachteilig ist jedoch der hohe Platzbedarf sowie der hohe Bau- und Kostenaufwand, da neben dem Kamin eine zusätzliche Wand in den entsprechenden Wohnraum eingebracht werden muss.

Aufgabe der Erfindung ist es, die aufgezeigten Nachteile des Standes der Technik zu beseitigen. Insbesondere soll ein kompakter alkoholbefeuerter Kamin geschaffen werden, der über eine Einrichtung zur Wärmespeicherung verfügt, mit deren Hilfe eine effektive Wärmespeicherung auch während Befeuerungen, die nur eine kurze Zeit dauern, typischerweise 0,5 bis 1 Stunde, möglich ist. Die gespeicherte Wärme soll anschließend über einen Zeitraum von mehreren Stunden wieder abgegeben werden.

Diese Aufgabe wird erfindungsgemäß durch die kennzeichnenden Merkmale des Anspruchs 1 gelöst; vorteilhafte Ausführungen des Kamins sind den Ansprüchen 2 bis 9 zu entnehmen.

Bei dem erfindungsgemäßen alkoholbefeuerten Kamin, der als Feuerstelle und ohne Anschluss an einen Schornstein betrieben wird, besteht nach Maßgabe der Erfindung mindestens eine der Wände und/oder die Decke des Kamins bzw. der Feuerkammer des Kamins ganz oder teilweise aus einem Verbundwerkstoff. Der Verbundwerkstoff setzt sich aus mindestens einer keramischen bzw. mineralischen Komponente mit hoher spezifischer Wärmekapazität und aus mindestens einer metallischen Komponente mit hoher thermischer Leitfähigkeit zusammen.

Die metallische Komponente bildet die Matrix des Verbundwerkstoffes. Die keramische/mineralische Komponente liegt in Form von Teilchen vor, die überall im Werkstoff, vom Bereich der Ränder abgesehen, vollständig von der metallischen Komponente umgeben sind.

Die Größe der keramischen/mineralischen Teilchen bewegt sich im Bereich von Bruchteilen von Millimetern (z.B. Sand) bis zu mehreren Zentimetern (z.B. Bruchstücke von Serpentin bzw. Speckstein).

In dem im erfindungsgemäßen Kaminen verwendeten Verbundwerkstoff beträgt vorteilhafterweise der Anteil der keramischen/mineralischen Komponente 40 bis 70% und der Anteil des Metalls entsprechend 60 bis 30%.

Die Matrix aus gut wärmeleitendem Metall bewirkt eine schnelle Aufnahme und Verteilung der Wärme im Verbundwerkstoff, da die Oberfläche der keramischen/ mineralischen Partikel vollständig vom Metall umgeben ist. Der Wärmefluss in einem solchen Verbundwerkstoff ist im Vergleich zu keramischem/mineralischem Material um einen Faktor 10³ erhöht. Folglich ist es durch die Verwendung der Verbundwerkstoffplatten möglich, die beim Betrieb von alkoholbefeuerten Kaminen entstehende Wärme auch bei kurzen Brenndauern effektiv zu speichern.

Um eine erhöhte Wärmeleitfähigkeit des Verbundwerkstoffes im Bereich, welcher der Feuerkammer zugewandt ist, zu erreichen, ist auch vorgesehen, dass die mittlere Dicke der Metallstege auf der der Feuerkammer zugewandten Seite größer als auf der nach außen gewandten Seite ist. Hierdurch wird bewirkt, dass die Wärme schneller von der nach innen gewandten Seite der Platte nach außen transportiert wird.

Besonders vorteilhaft ist, die metallische Komponente aus Aluminium oder Kupfer auszuführen, da sich beide Materialien durch eine hohe Wärmeleitfähigkeit auszeichnen. Es bietet sich Aluminium an, da es einen niedrigeren Schmelzpunkt als Kupfer hat und auch wesentlich preiswerter ist. In jedem Fall kann der Verbundwerkstoff kostengünstig und mit nur geringem technischem Aufwand hergestellt werden. Mit Aluminium hergestellte Platten sind außerdem auch leicht und bruchfest, da Aluminium eine geringe spezifische Dichte hat und duktil ist.

Als oxidische, keramische oder mineralische, Komponenten des Verbundwerkstoffes, werden bevorzugt mineralische Stoffe verwendet, so z.B. Serpentin, der in Form von Bruchstücken in einer Aluminiumsmatrix eingebettet ist. Serpentin hat eine hohe spezifische Wärmekapazität, die mit dem gleichfalls gut geeigneten Specksteinvergleichbar ist. Serpentin ist jedoch wesentlich kostengünstiger. Alternativ zu Serpentin oder Speckstein können aber auch keramische Komponenten, und dann bevorzugt Schamotte verwendet werden. Schamottsteine sind ebenfalls kostengünstig, haben jedoch eine etwas geringere Wärmekapazität.

Die Verbundwerkstoff-Platten sind mittels eines Gießverfahrens hergestellt, bei dem die Schmelze der metallischen Komponente in eine Schüttung des keramischen/mineralischen Materials, die auf eine Temperatur weit unterhalb des Schmelzpunktes der metallischen Komponente erwärmt wurde, gedrückt wird, und die Metallschmelze, bedingt durch die niedrigere Temperatur des oxidischen Materials, kurz nach dem vollständigen Eindringen in die Schüttung erstarrt.

Der so hergestellte Verbundwerkstoff ist thermisch belastbar, da durch das Gießverfahren ein Zustand höherer Temperatur "eingefroren", d.h. die spätere Anwendungstemperatur vorweggenommen wurde. Infolgedessen treten im Verbundwerkstoff bei hohen Temperaturen praktisch keine thermischen Spannungen auf.

Die Erfindung wird nachfolgend anhand eines Ausführungsbeispieles näher erläutert; hierzu zeigen in schematischer Darstellung:
- Fig. 1:: den alkoholbefeuerten Kamin,
- Fig. 2:: eine Speicherplatte mit Rillen,
- Fig. 3:: eine Speicherplatte mit Röhren.

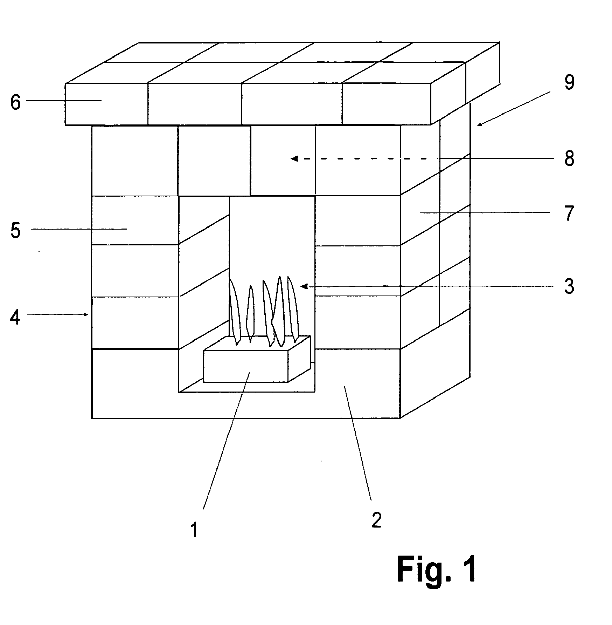

In Fig. 1 ist der alkoholbefeuerter Kamin mit einem Brenneinsatz 1 dargestellt, der der Aufnahme des Brennstoffs, üblicherweise Bioalkohol, und dessen Verbrennung mit einem Flammenbild, das dem eines Holzfeuers ähnlich ist, dient. Der Brenneinsatz 1 steht auf dem Sockel 2. Da beim Betrieb des Kamins die Verbrennungswärme nach oben abgegeben wird, und sich deshalb der Sockel auf Temperaturen von lediglich ca. 30°C erwärmt, ist dieser aus preiswertem Gasbeton hergestellt.

Die Feuerkammer des Kamins wird aus dem Sockel 2, den zwei Seitenwänden 4, der Vorderwand 5, der Deckenplatte 6 und der Rückwand 9 gebildet. Die Vorderwand 5 ist portalförmig so aufgebaut, dass im oberen Bereich der Feuerkammer 3, jedoch unterhalb der Deckenplatte 6 ein Hohl- bzw. Auffangraum für die beim Betrieb des Kamins aufsteigende heiße Luft entsteht. Durch diesen Hohlraum wird bewirkt, dass die heiße Luft eine längere Verweildauer in der Feuerkammer hat und infolgedessen über einen längeren Zeitraum Wärme abgibt.

Die Seitenwände 4, die Vorderwand 5 und die Deckenplatte 6 sind Verbundwerkstoffplatten mit einer Größe von 500 x 250 x 40 mm. Die metallische Komponente der Wärmespeicherplatten ist Aluminium, die mineralische Komponente Serpentin.

Da die meisten Kamine so aufgestellt werden, dass sich ihre Rückseite direkt an einer Wand befindet, ist hier Rückwand 9 eine feuerfeste und wärmeisolierende Mineralfaserplatte. Der Kamin ist modular aufgebaut, d.h. mit einem System können Eck-, Wand- und freistehende Kamine in individuell anpassbaren Größen erstellt werden. Bei Kaminen, die freistehend betrieben werden sollen, kann die Rückwand 9 ebenfalls aus Wärmespeicherplatten angefertigt sein.

Zur äußeren Gestaltung des Kamins können entweder die Speicherplatten poliert sein, wodurch ein ansprechender Marmoreffekt erzielt wird. Alternativ kann die Feuerstelle auch mit Edelstahl, Marmor, feuerfestem Putz oder anderen Gestaltungselementen verkleidet sein.

Der Kamin wird mit einem Abbrand von maximal 0,5 I Bioalkohol pro Stunde betrieben. Die Wärmespeicherplatten 7 erwärmen sich während des Betriebs innerhalb von 30 Minuten auf ca. 50°C und in 60 Minuten auf eine Temperatur von ca. 90°C. Die gespeicherte Wärme wird anschließend innerhalb einiger Stunden an den Raum abgegeben, wodurch die zur Raumheizung nutzbare Wärme verdoppelt wird.

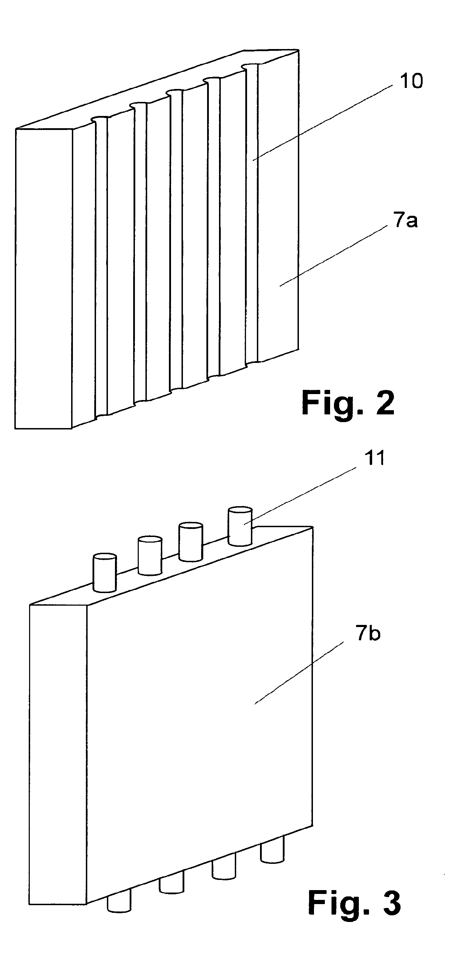

In Fig. 2 und 3 sind spezielle Ausformungen der Wärmespeicherplatten 7 abgebildet.

In die Oberfläche der in Fig. 2 abgebildeten Wärmespeicherplatte 7a sind in regelmäßigen Abständen die Rillen 10 eingebracht. Statt der Rillen kann die Platte auch mit Rippen versehen sein. Die Rillen/Rippen 10 dienen der Verbesserung des Wärmeaustauschs durch Konvektion. Dazu müssen bei eingebauter Platte die Rillen 10 von unten nach oben, also entsprechend der Bewegungsrichtung der erwärmten Luft, angeordnet sein und die mit Rillen versehen Flächen in Kontakt mit entweder der Luft des Wohnraums oder der Luft der Feuerkammer stehen.
Fig. 3 zeigt eine Wärmespeicherplatte 7b in die fluidführende Rohre 11 eingebettet sind. Werden die Rohre 11 mit Wärmespeicherplatten 7b zu einem Kreislauf verbunden, so ist zusätzlich zur Wärmespeicherung in den Platten ein Wärmetransport zu einem externen Gerät, wie z.B. zu einem Warmwasserspeicher oder einer Zentralheizung, möglich.
**Liste der verwendeten Bezugszeichen**
   - 1: Brenneinsatz
   - 2: Sockel
   - 3: Feuerkammer
   - 4: Seitenwand
   - 5: Vorderwand
   - 6: Deckenplatte
   - 7: Wärmespeicherplatte
   - 7a: Wärmespeicherplatte mit Rillen/Rippen
   - 7b: Wärmespeicherplatte mit eingebetteten Rohren
   - 8: Hohlraum
   - 9: Rückwand
   - 10: Rillen
   - 11: fluidführende Rohre

## Patentansprüche

1. Alkoholbefeuerter Kamin, der als Feuerstelle ohne Anschluss an einen Schornstein betrieben wird, **dadurch gekennzeichnet, dass** mindestens eine der Wände (4, 5, 9) und/oder die Decke (6) des Kamins oder der Feuerkammer des Kamins ganz oder teilweise aus einem Verbundwerkstoff, ausgeformt als Platten, besteht, der sich aus mindestens einer keramischen und/oder mineralischen Komponente mit einer hohen spezifischen Wärmekapazität und mindestens einer metallischen Komponente mit einer hohen thermischen Leitfähigkeit zusammensetzt, wobei die metallische Komponente die Matrix des Verbundwerkstoffes bildet und die als Teilchen vorliegende, keramische/mineralische Komponente, vollständig, außer im Bereich der Ränder, umschließt.

2. Kamin nach Anspruch 1, **dadurch gekennzeichnet, dass** die keramischen/mineralischen Teilchen Größen von Bruchteilen eines Millimeters bis zu mehreren Zentimetern aufweisen.

3. Kamin nach Anspruch 1 und 2, **dadurch gekennzeichnet, dass** in den Verbundwerkstoffplatten der Anteil des Metalls 30 bis 60 % beträgt.

4. Kamin nach Anspruch 1 bis 3, **dadurch gekennzeichnet, dass** die metallische Komponente Aluminium oder Kupfer ist.

5. Kamin nach Anspruch 1 bis 4, **dadurch gekennzeichnet, dass** die mineralische Komponente Serpentin oder Speckstein ist.

6. Kamin nach Anspruch 1 bis 5, **dadurch gekennzeichnet, dass** die keramische Komponente Schamottstein ist.

7. Kamin nach Anspruch 1 bis 6, **dadurch gekennzeichnet, dass** im Keramik-Metall-Verbundwerkstoff die mittlere Dicke der Metallstege, die durch die metallische Matrix gebildet sind, auf der der Feuerkammer (3) zugewandten Seite größer als auf der nach außen gewandten Seite ist.

8. Kamin nach Anspruch 1 bis 7, **dadurch gekennzeichnet, dass** in die Verbundwerkstoffplatten (7a) Rillen oder Rippen (10) eingebracht sind

9. Kamin nach Anspruch 1 bis 8, **dadurch gekennzeichnet, dass** in die Verbundwerkstoffplatte (7b) fluidführende Rohre (11) eingebracht sind.
